# EUROPÄISCHE PATENTSCHRIFT

(11) **EP 3 752 437 B1**
(45) Veröffentlichungstag und Bekanntmachung des Hinweises auf die Patenterteilung: **17.08.2022**
(21) Anmeldenummer: 19706357.1
(22) Anmeldetag: 08.01.2019
(51) Int. Cl.: B65G 45/12, B65G 45/16

(54) **ABSTREIFER UND ABSTREIFERELEMENT FÜR EINEN ABSTREIFER EINES FÖRDERBANDS**
SCRAPER AND SCRAPER ELEMENT FOR A SCRAPER OF A CONVEYOR BELT
RACLEUR ET ÉLÉMENT DE RACLEUR POUR UN RACLEUR D'UN CONVOYEUR

(30) Priorität: 08.01.2018 AT 500032018
(43) Veröffentlichungstag der Anmeldung: 23.12.2020
(73) Patentinhaber: 'SIETHOM' TECHNISCHES BÜRO GMBH, 4050 Traun (AT)
(72) Erfinder: MITTER, Siegfried, 4050 Traun (AT)
(74) Vertreter: Jell, Friedrich
(86) Internationale Anmeldenummer: PCT/AT2019/060006
(87) Internationale Veröffentlichungsnummer: WO 2019/134012

(56) Entgegenhaltungen:
- BR-A2- PI0 804 216
- CN-Y- 2 789 189
- GB-A- 2 364 985
- US-A1- 2005 126 889
- US-A1- 2017 158 434

## Beschreibung

### Technisches Gebiet

Die Erfindung betrifft ein Abstreiferelement für einen Abstreifer eines Förderbands, mit einem Abstreiferblatt und mit einem in Längserstreckung einer Halterungsschiene des Abstreifers einschiebbaren Fußstück, das gerade verläuft und entlang seines Fußendes eine, vorzugsweise mittige, Längsnut mit einer Nutbreite aufweist.

Um ein Abstreiferelement an einem Abstreifer für ein Förderband auswechselbar gestalten zu können, ist nach dem Oberbegriff des Anspruchs 1 aus der DE4390006T1 bekannt, am gerade verlaufenden Fußstück des Abstreiferelements eine Längsnut vorzusehen. Ein Sicherungselement greift hierzu in einen, sich zwischen der Längsnut des Abstreiferelements und der Halterungsschiene ergebenden Freiraum ein. Derart wird ein Abziehen des Abstreiferelements von der Halterungsschiene - nämlich quer zur Längsrichtung der Halterungsschiene - verhindert. Montage und Demontieren des Sicherungselements gestaltet sich bei Vorrichtungen des Stands der Technik jedoch vergleichsweise aufwendig und kompliziert. Beispielweise wird dies durch ein Festklemmen des Sicherungselements in der Längsnut verursacht - etwa durch ein verzogenes Abstreiferelement, was in der Praxis vergleichsweise häufig auftritt. Das Dokument BR PI0 804 216 A2 offenbart ein Abstreiferelement nach dem Oberbegriff des Anspruchs 1.

### Darstellung der Erfindung

Die Erfindung hat sich daher die Aufgabe gestellt, ein Abstreiferelement der eingangs geschilderten Art in der Konstruktion derart zu verändern, dass dessen Montage/Demontieren verlässlich sowie handhabungsfreundlich erfolgen können - ohne dabei dessen Standfestigkeit zu beeinträchtigen.

Die Erfindung löst die gestellte Aufgabe durch die Merkmale des Anspruchs 1.

Verringert sich die Nutbreite der Längsnut von einer Stirnseite des Abstreiferelements aus gesehen zumindest abschnittsweise, ist es zunächst möglich, eine sichere Montage des Abstreiferelements zu gewährleisten, da durch die sich verändernde Nutbreite auf einfach und zuverlässige Weise die Wirkung eines in die Nut eingreifenden Mittels - etwa eines Sicherungselements - auf das Fußende des Abstreiferelements einstellbar ist. Auch kann derart die Überwachung der korrekten Montage erfolgen, nämlich anhand der für das Einschieben eines Mittels - etwa eines Sicherungselements - aufzuwendenden Kraft.

Besonders aber kann die erfindungsgemäß ausgebildete Längsnut beim Demontieren des Abstreiferelements dafür sorgen, dass sich beim Herausziehen eines Sicherungselements die Demontagekraft - aufgrund der sich Richtung Stirnseite des Abstreiferelements vergrößernden Spaltbreite - vermindert, was unter anderem die Gefahr eines Festklemmens des Sicherungselements erheblich reduziert.

Eine besonders verlässliche und einfache Handhabbarkeit des Abstreiferelements kann so bei Montage und Demontieren sichergestellt werden - dies selbst in Fällen, bei denen das Abstreiferelement einer plastischen Formänderung unterlag und damit sowohl schwierig zu montieren als auch zu demontieren wäre.

Erfindungsgemäß verringert sich die Nutbreite kontinuierlich, was unter anderem die Herstellung des Abstreiferelements erleichtern kann.

Das Vorsehen und Entfernen eines Mittels - etwa eines Sicherungselements - aus der Längsnut kann weiter erleichtert werden, wenn sich die Nutbreite von beiden Stirnseiten des Abstreiferelements aus gesehen in Längsrichtung jeweils abschnittsweise verringert. Damit kann nämlich möglich werden, das Abstreiferelement über zwei gegenüberliegenden Sicherungselemente in der Führungsschiene zu halten. Somit ist nicht nur sicherzustellen, dass das erfindungsgemäße Abstreifelement besonders sicher und standfest gehalten wird - zudem ist mit einer gegenüber einem einzelnen Sicherungselement geringeren Zugkraft zum jeweiligen Entfernen der beiden Sicherungselemente zu rechnen.

Geht der Nutabschnitt mit der sich verringernden Nutbreite von der Stirnseite des Abstreiferelements aus, kann ein Festsitzen des Sicherungselements aufgrund von stirnseitigen Verunreinigungen weitgehend unterbunden werden. Auch die Wirkung eines Sicherungselements auf die Längsnut kann so verbessert bis zum Ende der Längsnut erfolgen. Zudem können - gegebenenfalls in einen stirnseitigen Spalt zwischen Sicherungselement und Längsnut - eingedrungene Verunreinigungen auf die Bewegungsrichtung des Sicherungselements keine störende Wirkung entfalten. Somit ist es möglich, die Handhabungsfreundlichkeit des Abstreiferelements weiter zu verbessern.

Das erfindungsgemäße Abstreiferelement kann sich insbesondere für einen Abstreifer für ein Förderband eigenen.

Insbesondere, wenn der Abstreifer eine Halterungsschiene zum Halten des Abstreiferelements und eine Sicherung aufweist, die ein längliches, sich zumindest abschnittsweise in Längsrichtung und zu seinem freien Ende hin verjüngendes Sicherungselement aufweist, das in den sich zwischen der Längsnut des Abstreiferelements und der Halterungsschiene ergebenden Freiraum eingreift und das Abstreiferelement mit der Halterungsschiene verspannt.

Ein besonders standfestes Halten des Abstreiferelements an der Halterungsschiene kann ermöglicht werden, wenn das Abstreiferelement durch einen, Hinterschnitt und Vorsprung aufweisenden Formschluss zwischen Abstreiferelement und Halterungsschiene quer zur Halterungsschiene gehalten ist und das Sicherungselement den Formschluss zwischen Abstreiferelement und Halterungsschiene verspannt.

Konstruktive Einfachheit am Abstreifer kann sich ergeben, wenn die Halterungsschiene im Querschnitt u-förmig ausgebildet ist und an ihren Schenkeln je einen Vorsprung aufweist, welche Vorsprünge in jeweils einen Hinterschnitt am Abstreiferelement eingreifen.

Vorzugsweise bilden die Vorsprünge den Längsrand der Schenkel der Halterungsschiene aus - etwa, um ein Eindringen von Verunreinigungen in die Halterungsschiene weiter zu erschweren und die Standfestigkeit des Abstreifers derart zu erhöhen.

Die mechanische Steifigkeit des Abstreifers kann weiter erhöht werden, wenn der Abstreifer einen Längsträger aufweist, welcher Längsträger entlang der Halterungsschiene verläuft. Außerdem kann dieser Längsträger die Handhabung der Sicherung erleichtern, wenn die Sicherung ein am Längsträger linear verschiebbares Führungselement aufweist.

Steht der Längsträger der Halterungsschiene in Längsrichtung vor und ist das Führungselement als entlang des Längsträgers verschiebbare Hülse ausgebildet, wobei das an der Hülse befestigte Sicherungselement der Hülse vorkragt, kann ein Einsetzen und ein Entfernen des Sicherungselements in die Längsnut erleichtert werden. Auf diese Weise ist die Wartung des Abstreifers weiter zu erleichtern.

Der Konstruktionsaufwand am Abstreifer kann weiter vermindert werden, wenn der im Querschnitt rechteckiger Stab das Sicherungselement ausbildet.

Indem die Sicherung einen Anschlag aufweist, der an die Halterungsschiene anschlägt, kann für ein sicheres und reproduzierbares Einbringen des Sicherungselements gesorgt werden - auch ist es möglich, das Abstreiferelement in Längsrichtung der Führungsschiene spielfrei zu sichern.

Vorstehende Vorteile sind besonders ausgeprägt, wenn auf beiden Stirnseiten des Abstreiferelement je eine Sicherung vorgesehen ist. Diese kann zu einer Reduzierung der für die einzelnen Sicherungselemente aufzuwendenden Klemmkraft beitragen - und somit das Entfernen der Sicherungselemente bzw. in weiterer Folge die Wartung des Abstreifers erleichtern.

Besonders kann sich der Abstreifer für ein Förderband bei einer Vorrichtung mit einer Bewegungseinrichtung eigenen, die mit dem Längsträger des Abstreifers über eine steckbare und formschlüssige Verbindung verbunden ist. Durch die steckbare und damit lösbare Verbindung kann nämlich das Abstreiferelement in Längsrichtung der Führungsschiene abgezogen werden.

Die Wartungsarbeiten am Abstreifer können erleichtert werden, wenn die Vorrichtung eine Abdeckung zum Schließen einer Schurrenwand einer Schurre aufweist, wobei die außen an der Abdeckung vorgesehene Bewegungseinrichtung über ein, die Abdeckung durchgreifendes mechanisches Antriebsmittel mit dem Abstreifer zu dessen Bewegung verbunden ist.

Vorzugsweise kann das mechanische Antriebsmittel eine Drehwelle aufweist, die mit dem Längsträger über die steckbare Verbindung verbunden ist. Damit kann beispielsweise ein Primärabstreifer an ein Förderband angestellt werden. Die Bewegungseinrichtung kann zudem den Abstreifer in einer Drehrichtung federbelasten, um die Abstreifwirkung am Förderband zu erhöhen.

Alternativ kann das mechanische Antriebsmittel eine Nocke aufweist, welche die steckbare Verbindung der Höhe nach in einer Linearführung der Abdeckung verlagert. Damit ist es möglich, einen Sekundärabstreifer an ein Förderband anzustellen - und zwar auch bei verschlossener Schurrenwand.

Vorzugsweise weist das Antriebsmittel eine elastische, insbesondere drehelastische, und nicht schaltbare Kupplung, insbesondere Elastomerkupplung, auf. Dies ermöglicht nicht nur eine elastische Vorspannung am Abstreiferelement, sondern kann auch Stöße aufnehmen und damit die Standfestigkeit der Vorrichtung weiter erhöhen. Vorzugsweise ist diese Kupplung als superelastische Kupplung ausgeführt, beispielsweise weist diese zwei gleichen Kupplungshälften mit einem elastischen Zwischenring (als Elastomerelement) mit auf beiden Endseiten eine einen Innen- und Außenverzahnung auf, die in entsprechende Gegenverzahnungen an den Kupplungshälften eingreifen.

Die Anstellung des Abstreiferelements zum Förderband kann erleichtert werden, wenn das Antriebsmittel ein Rastgesperre aufweist.

Vorzugsweise ist das das Rastgesperre antriebseitig gesehen vor der elastischen Kupplung vorgesehen, um das Abstreiferelement elastisch zu entkoppeln.

### Kurze Beschreibung der Zeichnungen

In den Figuren ist beispielsweise der Erfindungsgegenstand anhand mehrerer Ausführungsvarianten näher dargestellt. Es zeigen
Fig. 1 eine perspektivische Explosionsansicht zu einem Abstreifer mit einem Abstreiferelement nach einem ersten Ausführungsbeispiel,
Fig. 2 eine Seitenansicht auf den nach Fig. 1 dargestellten, zusammengesetzten Abstreifer,
Figuren 3a und 3b Schnittansichten nach IIIa-IIIa und IIIb-IIIb der Fig. 2,
Fig. 4 eine Schnittansicht auf ein Abstreiferelement nach einem anderen Ausführungsbeispiel,
Fig. 5 eine Vorrichtung mit einem Abstreifer nach Fig. 1,
Fig. 6 eine Explosionsdarstellung zu einem Antriebsmittel der Vorrichtung nach Fig. 5 und
Fig. 7 eine Explosionsdarstellung einer drehelastischen Kupplung des Antriebsmittels nach Fig. 6.

### Wege zur Ausführung der Erfindung

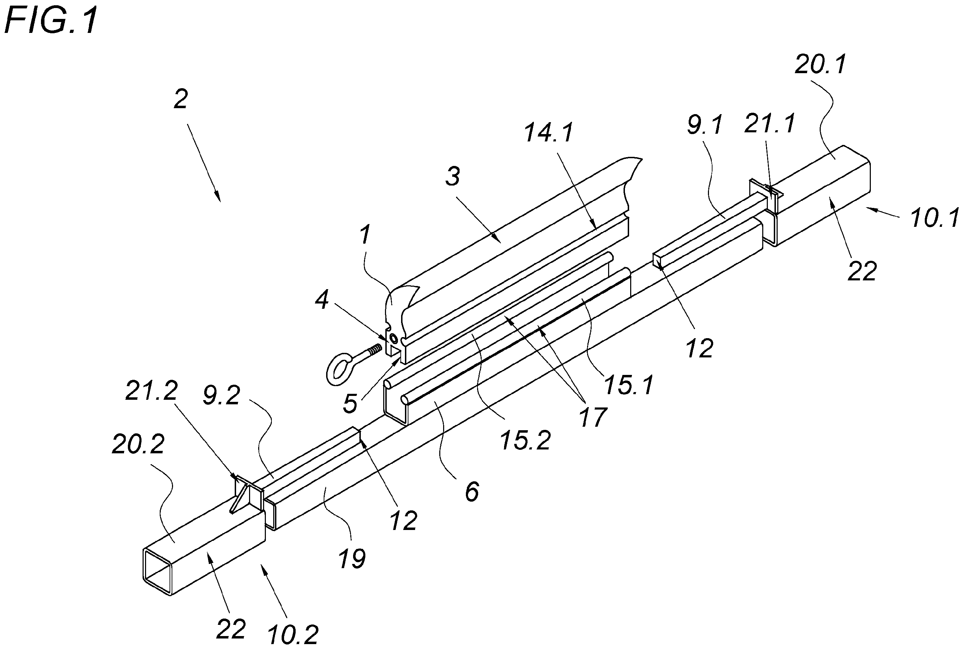

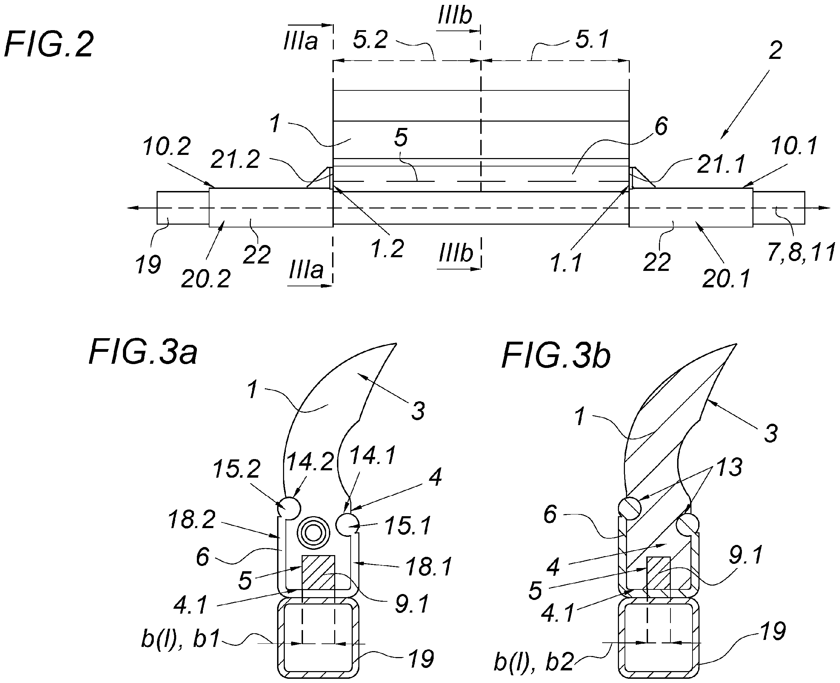

Fig. 1 zeigt beispielsweise ein Abstreiferelement 1 eines Abstreifers 2 nach einer ersten Ausführungsvariante für ein nicht in dieser Figur dargestelltes Förderband. Das einstückige Abstreiferelement 1 weist ein elastisches Abstreiferblatt 3 und ein daran anschließendes elastisches Fußstück 4 auf. Wie im Detail in den Figuren 3a und 3b zu entnehmen, verläuft das Fußstück 4 vom Abstreiferblatt 3 ausgehend gerade bis zu seinem Fußende 4.1. Zudem weist das Fußstück 4 eine - im Ausführungsbeispiel - mittig angeordnete Längsnut 5 auf, und zwar über die gesamte Länge l des Abstreiferelements 1 mit einer Nutenbreite b(l), b1, b2.

Diese Längsnut 5 am Fußstück 4 des Abstreiferelements 1 dient dem Zweck, das Abstreiferelement 1 gegenüber einem unerwünschten Abziehen von einer Halterungsschiene 6 des Abstreifers 2 sicheren zu können. Dabei ist das das Fußstück 4 in die Halterungsschiene 6 eingeschoben - und zwar in Längserstreckung 7 der Halterungsschiene 6.

Um die Handhabung zur Montage bzw. zum Demontieren des Abstreiferelements 1 an der Halterungsschiene 6 zu erleichtern, verringert sich erfindungsgemäß die Nutbreite b(l) (Nutenbreite b über die Länge l) der Längsnut 5 von einer Stirnseite 1.1 bzw. 1.2 des Abstreiferelements 1 aus gesehen in Längsrichtung 7 des Fußstücks 4 - die Längsnut verjüngt sich also entsprechend. Beispielsweise ist diese Verringerung anhand eines Vergleichs der Nutbreite b1 der Fig. 3a mit der Nutbreite b2 der Fig. 3b zu erkennen, was b1 > b2 ergibt.

Damit erhöht sich die Klemmkraft beim Einschieben eines Sicherungselements 9.1, 9.2 einer Sicherung 10.1, 10.2 in die Längsnut 5 bzw. kann diese Klemmkraft einfach und sicher eingestellt werden. Erfindungsgemäß wird somit eine sichere und standfeste Montage des Abstreiferelements 1 in der Halterungsschiene 6 ermöglicht. Zudem verringert sich die auf das Sicherungselement 9.1, 9.2 aufzuwendende Kraft bei dessen Herausziehen aus der Längsnut 5, was ein sicheres Demontieren des Abstreiferelements 1 ermöglicht. Dies auch bei einem stark verschmutzen oder durch Verwendung plastisch verformten Abstreiferelement 1 bzw. einer Längsnut 5.

Wie in den Figuren 1 und 2 zu erkennen, sind in die Längsnut 5 des Abstreiferelements 1 zwei Sicherungselemente 9.1, 9.2 eingesetzt und zwar an beiden Stirnseiten 1.1, 1.2 des Abstreiferelements 1. Die Längsnut 5 weist daher zwei verjüngende Nutabschnitte 5.1, 5.2 auf, die sich von der jeweiligen Stirnseite 1.1 bzw. 1.2 ausgehend erfindungsgemäß kontinuierlich verjüngen.

Wie in Fig. 1 außerdem zu erkennen, verjüngen sich die länglichen Sicherungselemente 9.1, 9.2 in Längsrichtung 11 zum jeweiligen freien Ende 12 hin. Die Sicherungselemente 9.1, 9.2 weisen je eine rechteckige Querschnittsform und gleichschenkelige trapezförmige Seitenflächen auf, die gleich ausgebildet sind. Derart ist beispielsweise eine einfache Herstellung ermöglicht.

Die Sicherungselemente 9.1, 9.2 greifen in den sich zwischen der Längsnut 5 des Abstreiferelements 1 und der Halterungsschiene 6 ergebenden Freiraum ein und sichern damit das Abstreiferelement 1 an der im Querschnitt u-förmigen Halterungsschiene 6. Dies, indem die eingesetzten Sicherungselemente 9.1, 9.2 das Abstreiferelement 1 von der Halterungsschiene 6 wegdrücken und damit einen Formschluss 13 verspannen, der sich durch zwei Hinterschnitte 14.1, 14.2 am Abstreiferelement 1 und zwei dazu komplementäre Vorsprünge 15.1, 15.2 an der Halterungsschiene 6 ergibt.

Die Hinterschnitte 14.1, 14.2 am Abstreiferelement 1 sind auf gegenüberliegenden Breiteseiten 16.1, 16.2 vorgesehen und höhenversetzt angeordnet. Dies gibt dem Abstreiferblatt 3 zusätzlichen Freiraum für eine biegebedingte Bewegung.

Wie außerdem der Fig. 1 entnommen werden kann, werden die im Querschnitt kreisrunden Vorsprünge 15.1, 15.2 durch den Längsrand 17 der gegenüberliegenden Schenkeln 18.1, 18.2 der Halterungsschiene 6 gebildet.

Die Halterungsschiene 6 ist an einem Längsträger 19 des Abstreifers 2 befestigt, welcher Längsträger 19 der Halterungsschiene 6 in Längsrichtung vorkragt - und zwar auf beiden Seiten. Diese vorkragenden Teile des Längsträgers 19 dienen zur Führung von Führungselementen 20.1, 20.2 der Sicherungen 10.1, 10.2. Dadurch sind die Sicherungen 10.1, 10.2 verhältnismäßig einfach handzuhaben. Wie in den Figuren dargestellt, werden die Führungselemente 20.1, 20.2 konstruktiv einfach gelöst durch Hülsen 22 ausgebildet.

Außerdem weisen die Sicherungen 10.1, 10.2 je einen Anschlag 21.1, 21.2 auf, die an der jeweiligen Halterungsschiene 6 anschlagen. Durch einen Anschlag 21.1, 21.2 ist zu gewährleisten, dass das Abstreiferelement 1 in der Halterungsschiene 6 besonders einfach und zuverlässig zu sichern ist. Auch kann auch ein vorteilhaftes Einbringen der Sicherungselemente 9.1, 9.2 erfolgen bzw. die Klemmkraft vorab eingestellt werden.

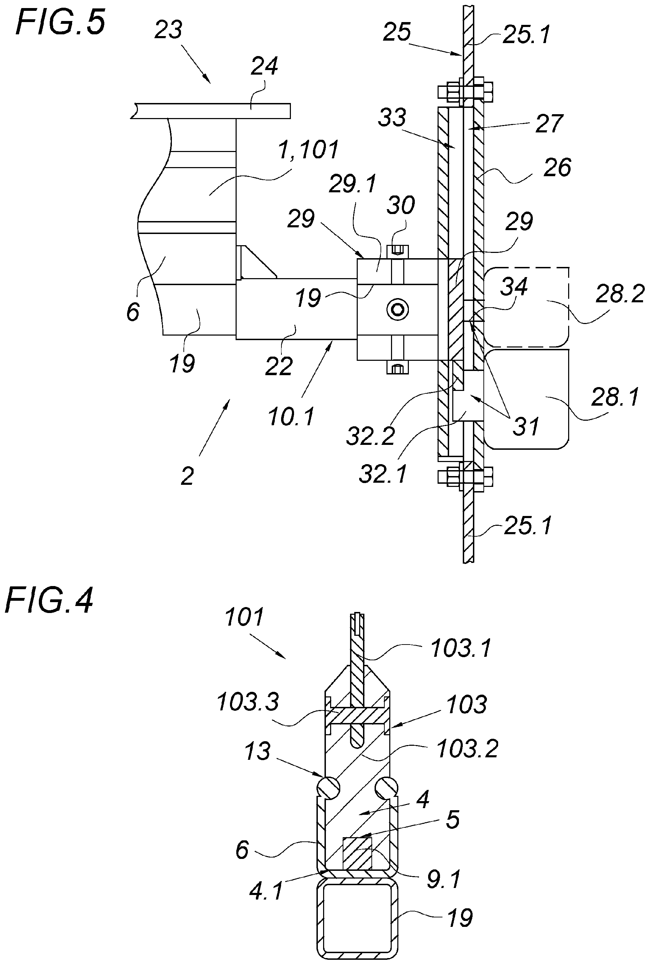

Nach Fig. 4 wird ein anderes Abstreiferelement 101 nach einem zweiten Ausführungsbeispiel dargestellt. Dies Abstreiferelement 101 unterscheidet sich vom Abstreiferelement 1 nach den Figuren 3a und 3b im Wesentlichen durch das Abstreiferblatt 103. Das Abstreiferblatt 103 ist hier zweiteilig ausgeführt - nämlich weist er einen leistenförmigen Schließkörper 103.1, der vorzugsweise aus Hartmetall oder Keramik hergestellt ist, und eine elastische Halterung 103.2 mit einem Bolzen 103.3 zur Fixierung des Schließkörpers 103.1 auf. An diese elastische Halterung 103.2 schließt das elastische Fußstück 4 wie bereits vorstehend zum Abstreiferelement 1 beschrieben an.

Nach Fig. 5 ist eine Vorrichtung 23 mit dem erfindungsgemäßen Abstreifer 2 dargestellt, der an ein abgerissen dargestelltes Förderband 24 anliegt. Der Abstreifer 2 ist an einer Schurrenwand 25.1 einer Schurre 25 befestigt - und zwar über eine Abdeckung 26 der Vorrichtung 23 zum Verschließen einer Öffnung 27 der Schurre 25, welche Abdeckung 26 an die Schurrenwand 25.1 lösbar angeschraubt ist.

Die Vorrichtung 23 weist eine Bewegungseinrichtung 28.1 bzw. 28.2 und eine steckbare und formschlüssige Verbindung 29 mit einem Verbindungselement 29.1 auf. In das Verbindungselement 29.1 kann der Längsträger 19 eingesteckt werden, der beispielsweise über schraubenförmige Niederhalter 30 des Verbindungselements 29.1 festgeklemmt wird. Zudem sichert dieses Verbindungselement 29.1 auch die Sicherung 10.1, 10.2 in der Lage am Längsträger 19. Die steckbare und formschlüssige Verbindung 29 wirkt daher in Form eines Spannelements.

Die Bewegungseinrichtung 28.1, 28.2, beispielsweise ein Motor, ist außen bzw. außerhalb der Schurre 25 an der Abdeckung 26 befestigt und mit einem mechanisches Antriebsmittel 31 wirkungsverbunden, welches Antriebsmittel 31 die Abdeckung 26 durchgreifen und den Abstreifer 2 zur Ausführung einer Bewegung beaufschlagen kann.

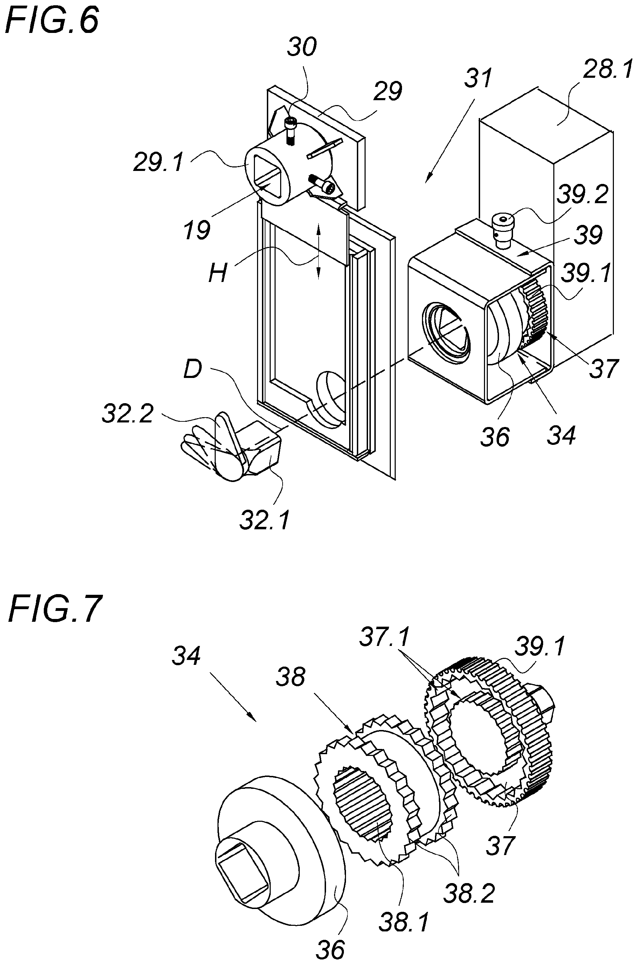

Bei der ersten Bewegungseinrichtung 28.1 weist das mechanische Antriebsmittel 31 eine Welle 32.1 mit einer Nocke 32.2 auf, welche die steckbare Verbindung 29 der Höhe H nach in einer Linearführung 33 der Abdeckung 26 verlagern kann, wie dies in Fig. 6 erkannt werden kann. Die Linearführung 33 steht normal auf die Drehachse D der Welle 32.1. Verschiedenste Drehlagen der Nocke 32.2 sind in Fig. 6 strichliert dargestellt. Ein vertikales Anstellen des Abstreifers 2 an das Förderband 24 ist damit möglich.

Damit kann der Abstreifer 2 als Sekundärabstreifer bei geschlossener Schurrenwand 25.1 verwendet werden, beispielsweise unter Verwendung des Abstreiferblatts 103 der Fig. 4.

Bei der zweiten, in Fig. 5 strichliert dargestellten Bewegungseinrichtung 28.2 weist das mechanische Antriebsmittel 31 eine Drehwelle 34 auf, die mit der steckbaren Verbindung 29 starr verbunden ist. Die Bewegungseinrichtung 28.2 unterwirft damit den Abstreifer 2 eine drehende Bewegung. Damit kann der Abstreifer 2 als Primärabstreifer bei geschlossener Schurrenwand 25.1 verwendet werden. Dies beispielsweise unter Verwendung des Abstreiferblatts 3 der Figuren 3a, 3b.

Wie in den Figuren 6 und 7 erkannt werden kann, weist das mechanische Antriebsmittel 31 zudem eine drehelastische und nicht schaltbare Kupplung 35, nämlich Elastomerkupplung, auf. Mit Hilfe der Kupplung 35 liegt das jeweilige Abstreiferelement 1, 101 unter Vorspannung an das Förderband 24 an.

Diese superelastische Kupplung 35 bildet sich aus zwei gleichen Kupplungshälften 36, 37 und einem elastischen Zwischenring 38 als Elastomerelement der Kupplung 35. Auf beiden Enden weist der Zwischenring 38 eine Innen- und Außenverzahnung 38.1, 38.2 auf, die in jeweilige Gegenverzahnungen 36.1, 37.1 an den Kupplungshälften 36, 37 eingreift. Der Zwischenring 38, beispielsweise aus Gummi oder aus einem anderen elastischen Material, sorgt für eine drehelastische Verbindung zwischen den beiden Kupplungshälften 36, 37. Zudem erlaubt dies am angestellten Abstreiferelement 1, 101 eine Beweglichkeit, was die Vorrichtung 23 robust gegenüber Stoßbelastungen ausbildet.

Diese Kupplung 35 ist je nach Ausführungsform (Primärabstreifer oder Sekundärabstreifer) beim Antriebsmittel 31 für die erste Bewegungseinrichtung 28.1 nach Fig. 5 oder beim Antriebsmittel 31 für die zweiten, in Fig. 5 strichliert dargestellten Bewegungseinrichtung 28.2 vorgesehen.

So ermöglicht die Kupplung 35 entweder eine drehelastische Bewegung der Drehwelle 34 oder eine drehelastische Bewegung der Nocke 32.2, um damit beispielsweise Stoßbelastungen auf das jeweilige Abstreiferelement 1, 101 abzufangen.

Die Anstellung des Abstreiferelements 1, 101 an Förderband 24 erleichtert ein Rastgesperre 39 des Antriebsmittels 31. Das Rastgesperre 39 ist antriebseitig gesehen vor der elastischen Kupplung 34 also nach dem jeweiligen Bewegungseinrichtung 28.1, 28.2 vorgesehen. Die Bewegungseinrichtung 28.1, 28.2 kann ein Motor oder auch ein Hebel, etc. sein.

Das Rastgesperre 39 wird von einer als Außenverzahnung 39.1 als Raststruktur und einem Stift 39.2 als Gegenraststruktur, der in die Außenverzahnung 39.1 federbelastet eingreift, gebildet. Die Außenverzahnung 39.1 als Raststruktur ist an der Kupplungshälfte 37 der Kupplung 34 angeordnet, was zu einer kompakten Bauform an der Vorrichtung 23 führt.

Dieses Rastgesperre 39 ist je nach Ausführungsform (Primärabstreifer oder Sekundärabstreifer) beim Antriebsmittel 31 für die erste Bewegungseinrichtung 28.1 nach Fig. 5 oder beim Antriebsmittel 31 für die zweite, in Fig. 5 strichliert dargestellten Bewegungseinrichtung 28.2 vorgesehen.

## Patentansprüche

1. Abstreiferelement für einen Abstreifer (2) eines Förderbands (24), mit einem Abstreiferblatt (3, 103) und mit einem in Längserstreckung (7) einer Halterungsschiene (6) des Abstreifers (2) einschiebbaren Fußstück (4), das gerade verläuft und entlang seines Fußendes (4.1) eine, vorzugsweise mittige, Längsnut (5) mit einer Nutbreite (b(l), b1, b2) aufweist, **dadurch gekennzeichnet, dass** sich die Nutbreite (b(l), b1, b2) der Längsnut (5) von einer Stirnseite (1.1, 1.2) des Abstreiferelements (1, 101) aus gesehen zumindest abschnittsweise kontinuierlich verringert.

2. Abstreiferelement nach Anspruch 1, **dadurch gekennzeichnet, dass** sich die Nutbreite (b(l), b1, b2) von beiden Stirnseiten (1.1, 1.2) des Abstreiferelements (1, 101) aus gesehen jeweils abschnittsweise verringert.

3. Abstreiferelement nach Anspruch 1 oder 2, **dadurch gekennzeichnet, dass** der Nutabschnitt (5.1, 5.2) mit der sich verringernden Nutbreite (b(l), b1, b2) von der Stirnseite (1.1, 1.2) des Abstreiferelements (1, 101) ausgeht.

4. Abstreifer für ein Förderband (24), mit einem Abstreiferelement (1, 101) nach einem der Ansprüche 1 bis 3, mit einer Halterungsschiene (6) zum Halten des Abstreiferelements (1, 101) und mit einer Sicherung (10.1, 10.2), die ein längliches, sich zumindest abschnittsweise in Längsrichtung und zu seinem freien Ende (12) hin verjüngendes Sicherungselement (9.1, 9.2) aufweist, das in den sich zwischen der Längsnut (5) des Abstreiferelements (1, 101) und der Halterungsschiene (6) ergebenden Freiraum eingreift und das Abstreiferelement (1, 101) mit der Halterungsschiene (6) verspannt.

5. Abstreifer nach Anspruch 4, **dadurch gekennzeichnet, dass** das Abstreiferelement (1, 101) durch einen, Hinterschnitt (14.1, 14.2) und Vorsprung (15.1, 15.2) aufweisenden Formschluss (13) zwischen Abstreiferelement (1, 101) und Halterungsschiene (6) quer zur Halterungsschiene (6) gehalten ist und das Sicherungselement (9.1, 9.2) den Formschluss (13) zwischen Abstreiferelement (1, 101) und Halterungsschiene (6) verspannt.

6. Abstreifer nach Anspruch 5, **dadurch gekennzeichnet, dass** die Halterungsschiene (6) im Querschnitt u-förmig ausgebildet ist und an ihren Schenkeln je einen Vorsprung (15.1, 15.2) aufweist, welche Vorsprünge (15.1, 15.2) in jeweils einen Hinterschnitt (14.1, 14.2) am Abstreiferelement (1, 101) eingreifen.

7. Abstreifer nach Anspruch 6, **dadurch gekennzeichnet, dass** die Vorsprünge (15.1, 15.2) den Längsrand (17) der Schenkel (18.1, 18.2) der Halterungsschiene (6) ausbilden.

8. Abstreifer nach einem der Ansprüche 4 bis 7, **dadurch gekennzeichnet, dass** der Abstreifer (2) einen Längsträger (19) aufweist, welcher Längsträger (19) entlang der Halterungsschiene (6) verläuft, und dass die Sicherung (10.1, 10.2) ein am Längsträger (19) linear verschiebbares Führungselement (20.1, 20.2) aufweist.

9. Abstreifer nach Anspruch 8, **dadurch gekennzeichnet, dass** der Längsträger (19) der Halterungsschiene (6) in Längsrichtung vorsteht und dass das Führungselement (20.1, 20.2) als entlang des Längsträgers (19) verschiebbare Hülse (22) ausgebildet ist, wobei das an der Hülse (22) befestigte Sicherungselement (9.1, 9.2) der Hülse (22) vorkragt.

10. Abstreifer nach einem der Ansprüche 4 bis 9, **dadurch gekennzeichnet, dass** ein im Querschnitt rechteckiger Stab das Sicherungselement (9.1, 9.2) ausbildet.

11. Abstreifer nach einem der Ansprüche 4 bis 10, **dadurch gekennzeichnet, dass** die Sicherung (10.1, 10.2) einen Anschlag (21.1, 21.2) aufweist, der an die Halterungsschiene (6) anschlägt.

12. Abstreifer nach einem der Ansprüche 4 bis 11, **dadurch gekennzeichnet, dass** auf beiden Stirnseiten (1.1, 1.2) des Abstreiferelements (1, 101) je eine Sicherung (10.1, 10.2) vorgesehen ist.

13. Vorrichtung mit einem Abstreifer (2) nach einem der Ansprüche 4 bis 12 für ein Förderband (24) und mit einer Bewegungseinrichtung (28.1, 28.2), die mit dem Längsträger (19) des Abstreifers (2) über eine steckbare und formschlüssige Verbindung (29) verbunden ist.

14. Vorrichtung nach Anspruch 13, **dadurch gekennzeichnet, dass** die Vorrichtung (23) eine Abdeckung (26) zum Schließen einer Schurrenwand (25.1) einer Schurre (25) aufweist, wobei die außen an der Abdeckung (26) vorgesehene Bewegungseinrichtung (28.1, 28.2) über ein, die Abdeckung (26) durchgreifendes mechanisches Antriebsmittel (31) mit dem Abstreifer (2) zu dessen Bewegung verbunden ist.

15. Vorrichtung nach Anspruch 14, **dadurch gekennzeichnet, dass** das mechanische Antriebsmittel (31) eine Drehwelle (34) aufweist, die mit dem Längsträger (19) über die steckbare Verbindung (29) verbunden ist.

16. Vorrichtung nach Anspruch 14, **dadurch gekennzeichnet, dass** das mechanische Antriebsmittel (31) eine Nocke (32.2) aufweist, welche die steckbare Verbindung (29) der Höhe nach in einer Linearführung (33) der Abdeckung (26) verlagert.

17. Vorrichtung nach einem der Ansprüche 13 bis 16, **dadurch gekennzeichnet, dass** das Antriebsmittel (31) eine elastische, insbesondere drehelastische, und nicht schaltbare Kupplung (34), insbesondere Elastomerkupplung, aufweist.

18. Vorrichtung nach einem der Ansprüche 13 bis 17, **dadurch gekennzeichnet, dass** das Antriebsmittel (31) ein Rastgesperre (39) aufweist.

19. Vorrichtung nach Anspruch 17 und 18, **dadurch gekennzeichnet, dass** das Rastgesperre (39) antriebseitig gesehen vor der elastischen Kupplung (34) vorgesehen ist.

## Claims

1. Scraper element for a scraper (2) of a conveyor belt (24), having a scraper blade (3, 103) and having a foot piece (4) which can be inserted in the longitudinal extension (7) of a mounting rail (6) of the scraper (2), which extends straight and has along its foot end (4. 1) a preferably a central longitudinal groove (5) with a groove width (b(l), b1, b2), **characterized in that** the groove width (b(l), b1, b2) of the longitudinal groove (5), as viewed from an end face (1.1, 1.2) of the scraper element (1, 101), is reduced continuously at least in sections.

2. Scraper element according to claim 1, **characterized in that** the groove width (b(l), b1, b2), as viewed from both end faces (1.1, 1.2) of the scraper element (1, 101), is reduced in each case in sections.

3. Scraper element according to claim 1 or 2, **characterized in that** the groove section (5.1, 5.2) with the reducing groove width (b(l), b1, b2) originates from the end face (1.1, 1.2) of the scraper element (1, 101).

4. Scraper for a conveyor belt (24), having a scraper element (1, 101) according to one of claims 1 to 3, having a mounting rail (6) for holding the scraper element (1, 101) and having a securing device (10.1, 10.2), which has an elongated securing element (9. 1, 9.2), which tapers at least in sections in the longitudinal direction and towards its free end (12), engages in the free space resulting between the longitudinal groove (5) of the scraper element (1, 101) and the mounting rail (6) and braces the scraper element (1, 101) with the mounting rail (6).

5. Scraper according to claim 4, **characterized in that** the scraper element (1, 101) is held between the scraper element (1, 101) and the mounting rail (6) transversely to the mounting rail (6) by a positive connection (13) having an undercut (14.1, 14.2) and a projection (15.1, 15.2), and the securing element (9.1, 9.2) braces the positive connection (13) between the scraper element (1, 101) and the mounting rail (6).

6. Scraper according to claim 5, **characterized in that** the mounting rail (6) is U-shaped in cross-section and has a projection (15.1, 15.2) on each of its legs, which projections (15.1, 15.2) engage in an undercut (14.1, 14.2) on the scraper element (1, 101) in each case.

7. Scraper according to claim 6, **characterized in that** the projections (15.1, 15.2) form the longitudinal edge (17) of the legs (18.1, 18.2) of the mounting rail (6).

8. Scraper according to one of claims 4 to 7, **characterized in that** the scraper (2) has a longitudinal support (19), which longitudinal support (19) extends along the mounting rail (6), and **in that** the securing device (10.1, 10.2) has a guide element (20.1, 20.2) which can be displaced linearly on the longitudinal support (19).

9. Scraper according to claim 8, **characterized in that** the longitudinal support (19) of the mounting rail (6) projects in the longitudinal direction, and **in that** the guide element (20.1,20.2) is designed as a sleeve (22) displaceable along the longitudinal support (19), wherein the securing element (9.1,9.2) fastened to the sleeve (22) projects from the sleeve (22).

10. Scraper according to one of the claims 4 to 9, **characterized in that** a rod of rectangular cross-section forms the securing element (9.1, 9.2).

11. Scraper according to one of claims 4 to 10, **characterized in that** the securing element (10.1, 10.2) has a stop (21.1, 21.2) which abuts against the mounting rail (6).

12. Scraper according to one of claims 4 to 11, **characterized in that** a securing device (10.1, 10.2) is provided on each of the two end faces (1.1, 1.2) of the scraper element (1, 101).

13. Device having a scraper (2) according to one of the claims 4 to 12 for a conveyor belt (24) and having a movement device (28.1, 28.2), which is connected to the longitudinal support (19) of the stripper (2) via a pluggable and positive connection (29).

14. Device according to claim 13, **characterized in that** the device (23) has a cover (26) for closing a chute wall (25.1) of a chute (25), wherein the movement device (28.1, 28.2) provided on the outside of the cover (26) is connected to the scraper (2) via a mechanical drive means (31) passing through the cover (26) for the movement thereof.

15. Device according to claim 14, **characterized in that** the mechanical drive means (31) has a rotary shaft (34) which is connected to the longitudinal support (19) via the pluggable connection (29).

16. Device according to claim 14, **characterized in that** the mechanical drive means (31) comprises a cam (32.2) which displaces the pluggable connection (29) vertically in a linear guide (33) of the cover (26).

17. Device according to one of claims 13 to 16, **characterized in that** the drive means (31) has an elastic, more particularly torsionally elastic, and non-switchable coupling (34), more particularly elastomer coupling.

18. Device according to one of claims 13 to 17, **characterized in that** the drive means (31) has a latching lock (39).

19. Device according to claims 17 and 18, **characterized in that** the latching lock (39) is provided upstream of the flexible coupling (34), as seen on the drive side.

## Revendications

1. Élément de racloir pour un racloir (2) d'une bande convoyeuse (24), avec une lame de racloir (3, 103) et avec un pied (4) pouvant être inséré dans la longueur (7) d'un rail de maintien (6) du racloir (2), qui est rectiligne et présente le long de son extrémité de pied (4.1) une rainure longitudinale (5), de préférence centrale, ayant une certaine largeur de rainure (b(l), b1, b2), **caractérisé en ce que** la largeur de rainure (b(l), b1, b2) de la rainure longitudinale (5) diminue constamment, au moins par sections, à partir d'une face d'extrémité (1.1, 1.2) de l'élément de racloir (1, 101).

2. Élément de racloir selon la revendication 1, **caractérisé en ce que** la largeur de rainure (b(l), b1, b2) diminue par section à partir de chacune des deux faces d'extrémité (1.1, 1.2) de l'élément de racloir (1, 101).

3. Élément de racloir selon la revendication 1 ou 2, **caractérisé en ce que** la partie de rainure (5.1, 5.2) où la largeur de rainure (b(l), b1, b2) diminue part de la face d'extrémité (1.1, 1.2) de l'élément de racloir (1, 101).

4. Racloir pour une bande convoyeuse (24), avec un élément de racloir (1, 101) selon l'une des revendications 1 à 3, avec un rail de maintien (6) pour maintenir l'élément de racloir (1, 101) et avec une fixation (10.1, 10.2) qui comporte un élément de fixation (9.1, 9.2) allongé se resserrant au moins par sections dans le sens de la longueur en direction de son extrémité libre (12), qui se met en prise dans l'espace libre formé entre la rainure longitudinale (5) de l'élément de racloir (1, 101) et le rail de maintien (6) et serre l'élément de racloir (1, 101) avec le rail de maintien (6).

5. Racloir selon la revendication 4, **caractérisé en ce que** l'élément de racloir (1, 101) est retenu transversalement par rapport au rail de maintien (6) par un engagement positif (13) entre l'élément de racloir (1, 101) et le rail de maintien (6) comportant une contre-dépouille (14.1, 14.2) et une saillie (15.1, 15.2) et l'élément de fixation (9.1, 9.2) serre l'engagement positif (13) entre l'élément de racloir (1, 101) et le rail de maintien (6).

6. Racloir selon la revendication 5, **caractérisé en ce que** le rail de maintien (6) est en forme de U en section et présente une saillie (15.1, 15.2) sur chacun de ses bras, ces saillies (15.1, 15.2) se mettant en prise chacune dans une contre-dépouille (14.1, 14.2) de l'élément de racloir (1, 101).

7. Racloir selon la revendication 6, **caractérisé en ce que** les saillies (15.1, 15.2) forment le bord longitudinal (17) des bras (18.1, 18.2) du rail de maintien (6).

8. Racloir selon l'une des revendications 4 à 7, **caractérisé en ce que** le racloir (2) présente un support longitudinal (19), lequel support longitudinal (19) s'étend le long du rail de maintien (6), et **en ce que** la fixation (10.1, 10.2) présente un élément de guidage (20.1, 20.2) capable de translation linéaire sur le support longitudinal (19).

9. Racloir selon la revendication 8, **caractérisé en ce que** le support longitudinal (19) dépasse du rail de maintien (6) dans le sens longitudinal et **en ce que** l'élément de guidage (20.1, 20.2) est conformé comme une douille (22) capable de translation le long du support longitudinal (19), l'élément de fixation (9.1, 9.2) de la douille (22) fixé sur la douille (22) formant un collet en saillie.

10. Racloir selon l'une des revendications 4 à 9, **caractérisé en ce qu'**une barre de section rectangulaire forme l'élément de fixation (9.1, 9.2).

11. Racloir selon l'une des revendications 4 à 10, **caractérisé en ce que** la fixation (10.1, 10.2) présente une butée (21.1, 21.2) qui bute sur le rail de maintien (6).

12. Racloir selon l'une des revendications 4 à 11, **caractérisé en ce qu'**une fixation (10.1, 10.2) est prévue sur chacune des deux faces d'extrémité (1.1, 1.2) de l'élément de racloir (1, 101).

13. Dispositif comprenant un racloir (2) selon l'une des revendications 4 à 12 pour une bande convoyeuse (24) et une installation de déplacement (28.1, 28.2) reliée avec le support longitudinal (19) du racloir (2) par une liaison (29) emboîtable et en correspondance de forme.

14. Dispositif selon la revendication 13, **caractérisé en ce que** le dispositif (23) présente une couverture (26) pour fermer une paroi de goulotte (25.1) d'une goulotte (25), le dispositif de déplacement (28.1, 28.2) prévu sur l'extérieur de la couverture (26) étant relié au racloir (2) en vue de son déplacement par un moyen d'actionnement mécanique (31) qui traverse la couverture (26).

15. Dispositif selon la revendication 14, **caractérisé en ce que** le moyen d'entraînement mécanique (31) comporte un arbre rotatif (34) qui est relié au support longitudinal (19) par une liaison emboîtable (29).

16. Dispositif selon la revendication 14, **caractérisé en ce que** le moyen d'entraînement mécanique (31) comprend une came (32.2) qui déplace la liaison emboîtable (29) en hauteur dans un guide linéaire (33) de la couverture (26).

17. Dispositif selon l'une des revendications 13 à 16, **caractérisé en ce que** le moyen d'entraînement (31) comporte un accouplement (34) élastique, en particulier élastique en torsion, et non débrayable, en particulier un accouplement en élastomère.

18. Dispositif selon l'une des revendications 13 bis 17, **caractérisé en ce que** le moyen d'entraînement (31) présente un dispositif d'arrêt à cliquet (39).

19. Dispositif selon les revendications 17 et 18, **caractérisé en ce que** le dispositif d'arrêt à cliquet (39) est prévu, vu du côté de l'entraînement, avant l'accouplement élastique (34).
